# EUROPEAN PATENT APPLICATION

(11) **EP 0 670 114 A1**
(43) Date of publication of application: **06.09.1995**
(21) Application number: 95101499.2
(22) Date of filing: 03.02.1995
(51) Int. Cl.: A21C 1/00, A21C 3/06

(54) **Machine for making croissants**

(30) Priority: 04.02.1994 IT PD940019
(71) Applicant: C.I.M. S.r.l., I-35035 Mestrino (Padova) (IT)
(72) Inventor: Bordin, Italo, I-35010 Cadoneghe (Padova) (IT)
(74) Representative: Modiano, Guido, Dr.-Ing.

(57) **Abstract**

The present invention relates to a machine for making croissants, of the type which comprises, in sequence, on a moving work surface formed by conveyor belts, a station for laminating a sheet of dough; a station (11) for cutting the sheet into transverse rows of triangles alternately orientated in opposite directions; and a rolling station (12). The machine is characterized in that a station (16) for orientating the triangles is placed between the cutting station (11) and the rolling station (12) and comprises means for actuating retractable points (25,26), each of which is adapted to penetrate a respective triangle of dough close to a vertex, forming a fulcrum which, as said work surface moves, causes the rotation of the triangle so that it is arranged with one side substantially at right angles to the advancement direction.

## Description

The present invention relates to a machine for making croissants.

It is known that the method for preparing crescent-shaped rolls, usually known as "croissants", consists in preparing a strip of dough by laminating it with a roller-equipped machine.

After a few operations for gauging the sheet of dough, said sheet enters a station that cuts triangles.

A final station rolls up the triangles prior to baking.

To avoid wasting material, the cutting station divides the sheet of dough into transverse rows of triangles orientated in alternate directions.

Because of the fact that the rows of triangles are orientated in opposite directions, various types of machine have been devised: in a first machine there is a single rolling station arranged at right angles to the advancement direction of the triangles and therefore there is a device that is adapted to orientate the rows of triangles that have an unsuitable orientation.

In another case, the machine has been equipped with two rolling stations at right angles to the advancement direction, which are alternately supplied with the rows of triangles.

In a third case, a single rolling station has been arranged in line with the moving work surface, and devices have been provided which are adapted to orientate the triangles of dough by sending them onto conveyors arranged laterally to the main one which, by means of a curved path, turn the triangles through 90°.

In all these embodiments, either the solution is not of the in-line type or it is necessary to redirect the triangles outside the line in order to orientate them.

A principal aim of the present invention is to provide a machine that achieves the processing of dough on a single line to produce croissants.

A consequent primary object is to provide a machine which, at the end of its processing cycle, arranges the formed croissants on trays to be used for baking.

Another object is to provide a machine in which the rolling station is supplied with a plurality of triangles at a time.

Another object is to provide a machine that is fully automatic and can be manufactured with conventional equipment.

This aim, these objects, and others which will become apparent hereinafter are achieved by a machine for making croissants, of the type which comprises, in sequence, on a moving work surface formed by conveyor belts, a station for laminating a sheet of dough; a station for cutting said sheet into transverse rows of triangles alternately orientated in opposite directions; and a rolling station; characterized in that a station for orientating said triangles is placed between said cutting station and said rolling station and comprises means for actuating retractable points, each of which is adapted to penetrate a respective triangle of dough close to a vertex, forming a fulcrum which, together with the motion of said work surface, causes the rotation of said triangle so that it is arranged with one side substantially at right angles to the advancement direction.

Further characteristics and advantages of the invention will become apparent from the detailed description of an embodiment thereof, illustrated only by way of non-limitative example in the accompanying drawings, wherein:
figure 1 is a schematic side view of the machine according to the invention;
figure 2 is a schematic perspective view thereof;
figures 3 and 4 are enlarged-scale perspective views of a detail of the orientation station in two steps of its operation;
figures 5 to 9 are schematic top views of the steps for orientating the triangles after cutting;
figure 10 is a perspective view of the arrangement in which a rolled croissant is placed on a tray for baking.

With reference to the above figures, a machine according to the invention comprises a set 10 of conveyor belts located downstream of a per se known lamination station which is not shown in the figures for the sake of simplicity and from which a gauged sheet of dough exits; said conveyor belts are mutually aligned and arranged in sequence and form a moving work surface on which there is a cutting station, generally designated by the reference numeral 11, followed by a rolling station generally designated by the reference numeral 12.

The cutting station 11 is per se known and includes a pair of rollers provided with blades, respectively 13 and 14, which divide the sheet of dough into rows of triangles, designated by the reference numerals 15a and 15b respectively, which are arranged in alternately opposite directions.

An orientation station, generally designated by the reference numeral 16, is arranged between the cutting station 11 and the rolling station 12 and is adapted to rotate the triangles 15a and 15b so that one of their sides is arranged substantially at right angles to the advancement direction.

In the case being considered, each row 15a and 15b is composed of four triangles; after cutting, the rows move mutually apart due to the jogging motion of the conveyor belt located below the cutting station 11.

The triangles pass under a pair of rollers 17 and 18 before reaching the orientation station.

Said orientation station 16 has, in sequence, two orientation devices 19a and 19b, each of which is adapted to rotate two of the triangles of dough of each row 15a or 15b, particularly the first one and the third one and/or the second and fourth ones.

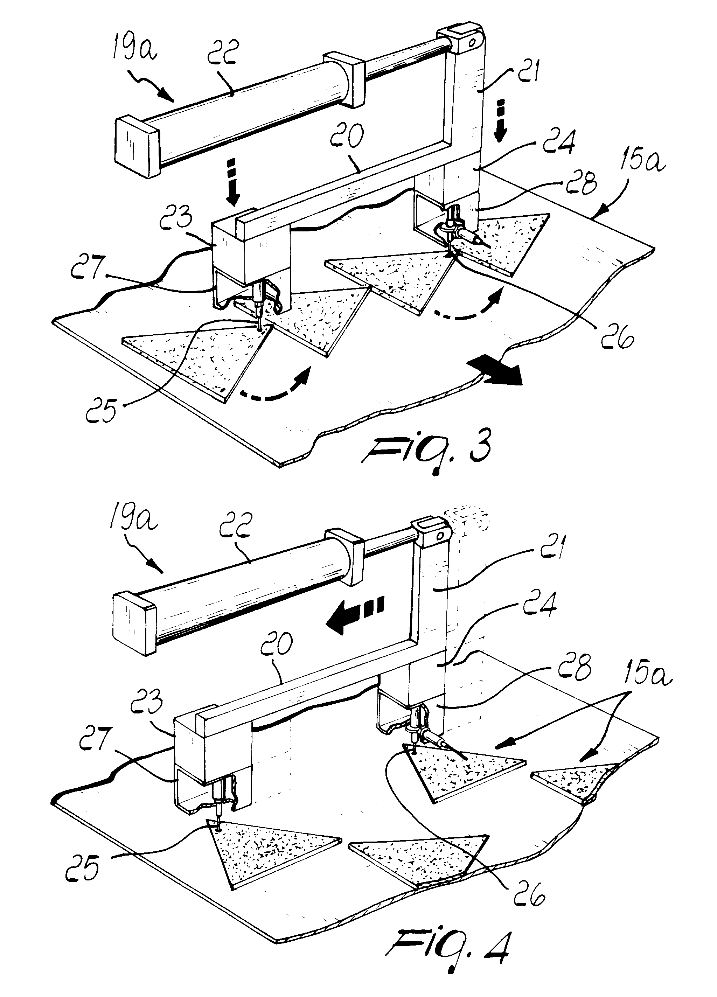

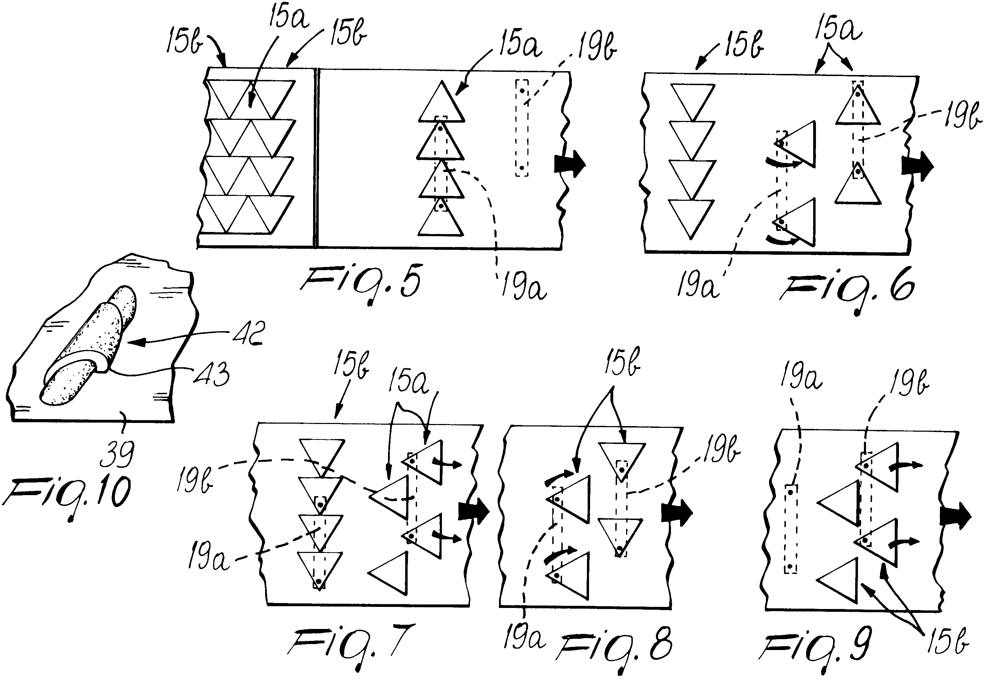

Figures 3 and 4 show, in particular, the device 19a which, like the device 19b, comprises a beam-shaped support 20 arranged at right angles to the advancement direction and having a wing 21 that associates it with the stem of a pneumatic cylinder 22 arranged parallel to and above it.

Secondary pneumatic cylinders 23 and 24 are rigidly coupled below the support 20, at its ends, and points 25 and 26 are axially mounted on their vertically movable stems; said points can retract into, and pass through, respective box-like structures 27 and 28 which are fixed below each secondary cylinder 23 and 24.

Directly downstream of the support 20 there is a sensor 29a (and therefore a sensor 29b for the device 19b) which is adapted to identify the incoming triangles of dough and issue the command for activating the device 19a or 19b.

In practice, the cylinder 22 arranges the secondary cylinders 23 and 24 as shown in figure 3, and said secondary cylinders cause the points 25 and 26 to penetrate at the vertices of two triangles 15a.

The points 25 and 26 form respective fulcrums that, together with the straight-line motion of the work surface, cause the rotation of each triangle so that one of its sides is arranged substantially at right angles to the advancement direction.

In order to avoid interference during rotation with the other two triangles that do not move with respect to the conveyor belt, the pneumatic cylinder 22 must perform a transverse motion, shown in figure 4, during the rotation of the triangles, so as to move the fulcrum point transversely.

The cylinder 22 may also move the secondary cylinders 23 and 24 by an extent that makes the points 25 and 26 penetrate at the vertices of the triangles 15b by means of a transverse movement.

The rolling station has a gauging roller 32 on a conveyor belt 30 with longitudinal sets of rows of holes 31 on which the triangles of dough are conveyed; downstream of said gauging roller, a transverse support 33 supports pairs of flat flexible elements 34 which are fixed by means of their ends and slide with their respective free ends on the belt 30.

Since said elements 34 are arranged at the arrival paths of the corners at the base of the dough triangles, they lift said corners by friction and start the rolling process.

The central portion of a sheet 35 made of flexible material slides on the belt 30 downstream of the elements 34 and is supported, at its ends, on cross-members 36 and 37; flexible elements 38 having a high specific gravity are placed on the initial part of the sheet 35 and keep it in contact with the belt 30.

The triangles of dough pass between the sheet 35 and the belt 30 and roll up; they are then unloaded at the end of the belt 30 onto a tray 39 that is carried by a lower conveyor belt 40.

The length of the portion of the sheet 35 that is in contact with the belt 30 can be adjusted by varying the position of the cross-members 36 and/or 37, so as to make the triangles of dough perform a number of rolling turns that causes the rolled croissants 42 to fall onto the tray 39 with their tip 43 (see figure 10) directed downwardly, preventing said tip from opening and moving away from the rest of the croissant during subsequent baking.

Said conveyor 40 is moved in steps as the tray 39 is filled with croissants.

The trays 39 are placed on the conveyor belt 40 between partitioning cross-members 41 which are appropriately spaced from one another.

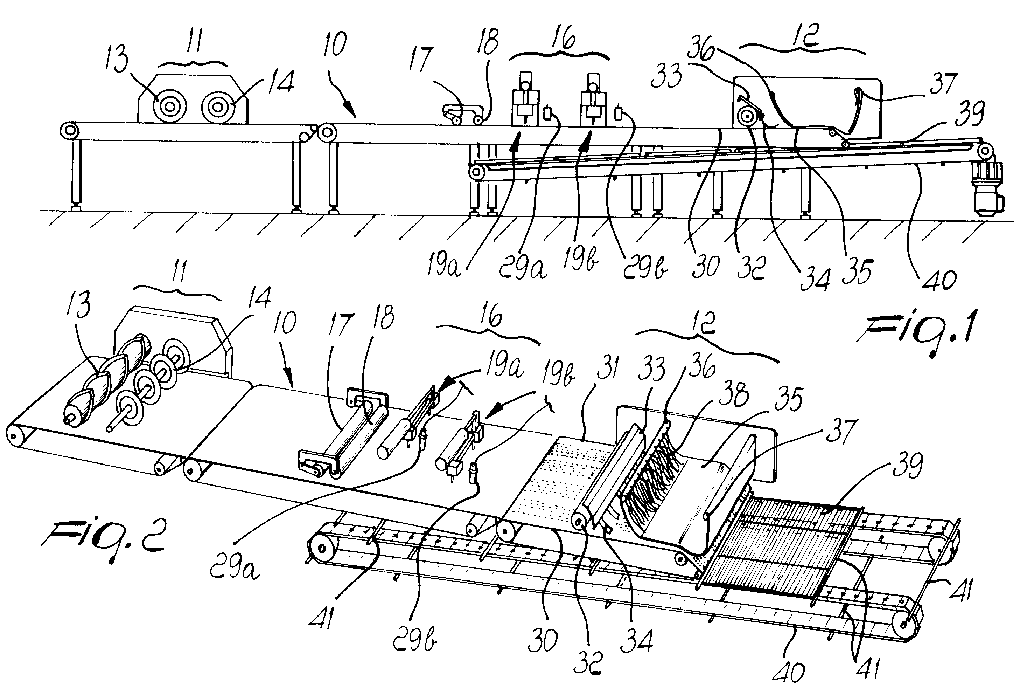

As shown in figures 1 and 2, the conveyor 40, in the case being considered, starts at the orientation station 16 and ends downstream of the rolling station 12.

Figures 5 to 9 schematically illustrate the steps for initially orientating the row of triangles 15a and then the row 15b by virtue of the action of the two devices 19a and 19b, each of which acts on two triangles of each row.

From the above description, it is therefore evident that a machine has been provided in which the rolling station is in line with the cutting station and in which a station for orientating the triangles produced by cutting is provided between the cutting station and the rolling station.

The machine also includes the feeding of trays with the rolled croissants.

In practice it has been observed that the intended aim and objects of the present invention have been achieved.

The invention thus conceived is susceptible of numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Machine for making croissants, of the type which comprises, in sequence, on a moving work surface formed by conveyor belts, a station for laminating a sheet of dough; a station for cutting said sheet into transverse rows of triangles alternately orientated in opposite directions; and a rolling station; characterized in that a station for orientating said triangles is placed between said cutting station and said rolling station and comprises means for actuating retractable points, each of which is adapted to penetrate a respective triangle of dough close to a vertex, forming a fulcrum which, together with the motion of said work surface, causes the rotation of said triangle so that it is arranged with one side substantially at right angles to the advancement direction.

2. Machine according to claim 1, characterized in that it comprises, below said moving work surface formed by conveyor belts, a jogging continuous conveyor for trays on which the croissants are loaded after rolling, said continuous conveyor ending downstream of said work surface.

3. Machine according to claim 1, characterized in that said means for actuating retractable points comprise an actuator that is movable transversely with respect to the advancement direction of said work surface and supports, in a downward region, at least one actuator that is vertically movable and to which a respective one of said points is rigidly coupled.

4. Machine according to claim 3, characterized in that said actuators are constituted by pneumatic cylinders.

5. Machine according to claims 3 and 4, characterized in that downstream of at least one of said points there is a sensor adapted to detect the presence of said triangles of dough below said points.

6. Machine according to claims 3 and 4, characterized in that said actuators cause a vertical movement of each point so that it penetrates the respective triangle and a horizontal transverse motion that adjusts the position of the triangle on said moving work surface.

7. Machine according to one or more of claims 3 to 6, characterized in that said actuators adapted to perform transverse motions with respect to said work surface can perform strokes for moving said points to penetrate the triangles orientated in one direction and the triangles orientated in the opposite direction.

8. Machine according to one or more of claims 1 and 3 to 7, characterized in that said retractable points are arranged on a plurality of transverse lines so as to divide over a plurality of regions the completion of the orientation of each row of triangles produced by cutting.

9. Machine according to one or more of the preceding claims, characterized in that said points can retract into, and pass through, box-like elements which are fixed, in a downward region, to their respective actuators.

10. Machine according to one or more of the preceding claims, characterized in that said conveyor belts are actuated, upstream of said orientation station, so as to mutually space the rows of triangles produced by cutting.

11. Machine according to claim 1, characterized in that said rolling station has a transverse support that supports pairs of flat flexible elements which are fixed by their ends and slide on said work surface with their respective free ends, said flat elements being arranged at the arrival paths of the corners at the base of said dough triangles, said corners being raised by virtue of the friction of said flat elements.

12. Machine according to one or more of claims 1 and 11, characterized in that said rolling station comprises, downstream of said flat elements, a sheet of flexible material that is supported, at its ends, on upper cross-members and slides so that it rests on said movable surface with its median portion, elements having a high specific gravity being placed on the initial part of said sheet and being adapted to keep it in contact with said work surface.

13. Machine according to one or more of claims 1 and 10 to 12, characterized in that the length of said median portion of said sheet in contact with said movable surface is adjustable.

14. Machine according to one or more of claims 1 and 10 to 13, characterized in that a gauging roller is located upstream of said rolling station.

15. Machine according to claim 1, characterized in that said rolling station comprises a surface of adjustable length which is arranged at an adjustable height above said moving surface and is substantially parallel to said surface.
